# EUROPÄISCHE PATENTSCHRIFT

(11) **EP 0 677 319 B1**
(45) Veröffentlichungstag und Bekanntmachung des Hinweises auf die Patenterteilung: **18.08.1999**
(21) Anmeldenummer: 95104126.8
(22) Anmeldetag: 21.03.1995
(51) Int. Cl.: B01D 53/70, B01D 53/10, B03C 3/019

(54) **Verfahren und Vorrichtung zur Abtrennung von Dioxinen und Furanen aus dem Abgas eines Sinterprozesses**
Process and apparatus for eliminating dioxines and furanes from exhaust gases of a sintering process
Procédé et dispositif pour éliminer les dioxines of furanes d'un gaz d'échappement d'un procédé de frittage

(30) Priorität: 16.04.1994 DE 4413280
(43) Veröffentlichungstag der Anmeldung: 18.10.1995
(73) Patentinhaber: Metallgesellschaft Aktiengesellschaft, 60325 Frankfurt am Main (DE)
(72) Erfinder: Herden, Hansjörg, Dr., D-63110 Rodgau (DE); Federhen, Stefan, D-60538 Frankfurt am Main (DE); Mayer-Schwinning, Gernot, D-61352 Bad Homburg (DE)

(56) Entgegenhaltungen:
- EP-A- 0 612 555
- DE-A- 4 113 597

## Beschreibung

Die Erfindung bezieht sich auf ein Verfahren und eine Vorrichtung zur Abtrennung von polyhalogenierten Dibenzodioxinen und Dibenzofuranen aus dem Abgas eines Sinterprozesses, insbesondere eines Eisenerz-Sinterprozesses.

Feinkörnige oder pulverförmige Materialien werden durch Sinterung kompaktiert und dadurch in leichter zu handhabende Formen, wie z.B. Granulate und Pellets, überführt. Das Sintern wird beispielsweise zum Kompaktieren von Erzen eingesetzt. Zu diesem Zweck wird das feinkörnige Erz mit feinkörnigen, kohlenstoffhaltigen Brennstoffen gemischt, agglomeriert und in einer Sinteranlage unter Zufuhr von sauerstoffhaltigen Gasen auf Temperaturen oberhalb 1000°C erhitzt. Die gesinterten Erzagglomerate haben die Form von Granulaten oder Pellets und besitzen eine bestimmte mechanische Festigkeit, so daß sie problemlos - beispielsweise im Hochofen - zu Metallen reduziert werden können. Bei der Sinterröstung werden feinkörnige sulfidische Erze abgeröstet und gleichzeitig zu gesinterten Granulaten und Pellets verarbeitet.

Beim Sintern werden insbesondere Carbonate und Sulfate zersetzt, Sulfide oxidiert, leichtflüchtige Oxide, Sulfide und Chloride verdampft und gebundenes Wasser ausgetrieben. Die beim Sinterprozeß entstehenden Abgase enthalten also die bei der Verbrennung von Kohlenstoff gebildeten gasförmigen Reaktionsprodukte CO und CO₂ sowie die aus den Erzen freigesetzten gasförmigen Schadstoffe. Da beim Sinterprozeß auch Halogenide, insbesondere Chloride, sowie Kohlenstoff anwesend sind, kommt es zur Bildung von polyhalogenierten Dibenzodioxinen (PCDD) und polyhalogenierten Dibenzofuranen (PCDF), die mit dem Abgastrom aus der Sinteranlage ausgetragen werden. Schließlich ist das Abgas des Sinterprozesses mit staubförmigen Feststoffteilchen verunreinigt. Es ist erforderlich, die gasförmigen Schadstoffe, insbesondere CO, SO₂, HCl und HF, den Staub sowie die polyhalogenierten Dibenzodioxine und Dibenzofurane aus dem Abgas abzutrennen, bevor es in die Atmosphäre entlassen wird.

Aus der DE-PS 41 05 214 ist ein Verfahren zur Reinigung des Abgasstroms einer Sinteranlage bekannt, bei dem der aus einer Bandsintermaschine abgezogene Abgasstrom in einer Elektroabscheideranlage entstaubt wird und bei dem der aus der Elektroabscheideranlage austretende Abgasstrom mit einer feindispersen, wäßrigen Behandlungslösung, die Wasserstoffperoxid enthält, angefeuchtet und anschließend einem Gaswäscher zugeführt wird, der ein Sprühelektrodenaggregat sowie eine daran anschließende Waschzone aufweist, und bei dem der angefeuchtete und tropfenfrei durch das Sprühelektrodenaggregat geführte Abgasstrom in der Waschzone des Gaswäschers mit feindisperser Waschflüssigkeit beaufschlagt wird, die feingemahlene Aktivkohle oder feingemahlenen Herdofenkoks enthält. Bei dem bekannten Verfahren ist alternativ vorgesehen, daß der angefeuchtete und tropfenfrei durch das Sprühelektrodenaggregat geführte Abgasstrom in der Waschzone des Gaswäschers mit feindisperser Waschflüssigkeit beaufschlagt wird, die in einem Waschflüssigkeitskreislauf geführt und vor Eintritt in den Gaswäscher durch einen Aktivkohlefilter oder eine Schüttung aus Herdofenkoks hindurchgeführt wird.

Aus der DE-OS 41 13 597 ist ein Verfahren zur Reinigung von Abgas bekannt, bei dem zusätzlich zur Entfernung von Staub, HCl, HF, SO₂ und ggf. NOₓ Schadstoffe, insbesondere Dioxine und Furane, durch Adsorption an einem Adsorptionsmittel entfernt werden, wobei als Adsorptionsmittel Zeolithe mit einem Mol-Verhältnis SiO₂ zu Al₂O₃ von 2 bis 6 eingesetzt werden. Bei diesem Verfahren ist ferner vorgesehen, daß das Abgas zunächst mit den Zeolithen vermischt und anschließend durch ein Gewebefilter mit einer Filterschicht geleitet wird, wobei dem Abgas pro m³ 30 bis 700 mg Zeolithe mit einem Korndurchmesser von 1 bis 100 µm, insbesondere 5 bis 20 µm, zugeführt werden.

Aus der DE-OS 40 12 982 ist ein Verfahren zur Reinigung von Gasen und Abgasen von anorganischen und organischen Schadstoffen bekannt, bei dem feinpulveriges, aktiviertes Aluminiumoxid, Kieselgel, Kieselgur, feinpulverige Zeolithe und/oder ähnliche anorganische Stoffe in den Gasstrom eingeblasen, Gas und Feststoff durchmischt, die Feststoffe auf ein Flächenfilter aufgetragen, als erneuerbare, lockere, hinreichend tiefe Adsorptionsschicht auf dem Filter belassen und die Feststoffe von dort mechanisch, mit Schadstoffen beladen, entfernt werden. Bei dem bekannten Verfahren ist ferner vorgesehen, daß die oberflächenaktiven, anorganischen Substanzen als feinpulveriges Material eingesetzt werden, deren Kornverteilung zu 100 % < 100 µm, vorzugsweise 50 µm ist. Dieses Verfahren soll u.a. zur Abscheidung von Dioxinen und Furanen eingesetzt werden.

Die DE-OS 41 28 106 beschreibt ein Verfahren zur selektiven Abtrennung von hochkondensierten, polyzyklischen Kohlenwasserstoffen, insbesondere von halogenierten Dibenzodioxinen und Dibenzofuranen, aus vorentstaubten, SO₂-, H₂O- und Schwermetall-haltigen Abgasen durch Adsorption der Kohlenwasserstoffe an festen Adsorptionsmitteln, bei dem als Adsorptionsmittel ein dealuminierter Zeolith mit einem SiO₂/Al₂O₃-Verhältnis von 20 : 1 bis 1000 : 1 zum Einsatz kommt, die Adsorption bei einer Temperatur von 20 bis 200°C erfolgt, der Zeolith einen Teilchendurchmesser von 1 bis 5 mm hat und in einem Festbettreaktor oder einem Reaktor mit bewegtem Bett angeordnet ist.

Schließlich wird in der EP-A-6 666 098, veröffentlicht am 09/08/95 ein Verfahren zur Reinigung von sauerstoffhaltigen, bei der Verbrennung von Müll, Industrieabfällen und Klärschlamm anfallenden Abgasen vorgeschlagen, bei dem u.a. polyhalogenierte Kohlenwasserstoffe durch Adsorption an Zeolithen aus den Abgasen entfernt werden, wobei die Abgase oberhalb des Taupunkts bei einer Temperatur von 80 bis 180°C und einer Gasgeschwindigkeit von 3 bis 20 m/s mit einer Mischung aus natürlich vorkommenden Zeolithen während einer Reaktionszeit von 0,5 bis 10 s in einer Gas-Feststoff-Suspension zur Reaktion gebracht werden und wobei die mittlere Teilchengröße d₅₀ der Zeolith-Mischung 5 bis 50 µm und die mittlere Suspensionsdichte der Gas-Feststoff-Suspension 0,02 bis 10 kg Feststoff pro Nm³ Abgas beträgt (Nm³=m³ Gas im Normalzustand, trocken).

Die technische Anwendbarkeit der bekannten Abgasreinigungsverfahren bei der Reinigung von Sinterabgasen hängt insbesondere davon ab, daß sie möglichst geringe Investitions- und Betriebskosten verursachen und daß sie Verfahrensprodukte liefern, die In möglichst geringer Menge anfallen sowie entweder ohne größere Schwierigkeiten deponiert oder im Sinterprozeß verarbeitet oder nach einer Regeneration in die Reinigungsprozesse zurückgeführt werden. Die vorliegende Erfindung hat sich das Ziel gesetzt, als Adsorptionsmittel Zeolithe zu benutzen, um die Verwendung von Aktivkohle als Adsorptionsmittel sowie die damit einhergehenden Gefahren für die Betriebssicherheit der Adsorptionsanlagen zu vermeiden. Es hat sich gezeigt, daß die bekannten Reinigungsverfahren wegen der gestiegenen Anforderungen an die Reinigungsleistung verbessert werden müssen. Daher liegt der Erfindung die Aufgabe zugrunde, ein Verfahren zur Reinigung von Sinterabgasen zu schaffen, das auch bei Schwankungen der einzelnen Schadstoffkonzentrationen zuverlässig die Einhaltung von niedrigen Schadstoffkonzentrationen im Reingas gestattet und das wirtschaftlich arbeitet. Das Verfahren muß insbesondere gewährleisten, daß das Reingas eine Konzentration an polyhalogenierten Dibenzodioxinen und Dibenzofuranen von < 0,1 ng TE pro Nm³ hat (TE = Toxizitäts-Äquivalente gemäß NATO-Standard). Der Erfindung liegt ferner die Aufgabe zugrunde, eine Vorrichtung zur Durchführung des Verfahrens zu schaffen.

Die der Erfindung zugrundeliegende Aufgabe wird dadurch gelöst, daß das gesamte, staubhaltige Abgas des Sinterbandes oberhalb des Taupunktes bei einer Temperatur von 90 bis 180°C und einer Geschwindigkeit von 6 bis 20 m/s mit einer Mischung aus natürlich vorkommenden Zeolithen in einer Gas-Feststoff-Suspension während einer Reaktionszeit von 0,5 bis 10 s in Kontakt gebracht wird, wobei der mittlere Teilchendurchmesser d₅₀ der Zeolith-Mischung 5 bis 100 µm und die mittlere Suspensionsdichte der Gas-Feststoff-Suspension 5 bis 500 g Feststoff pro Nm³ Abgas beträgt, daß der Staub sowie die Zeolith-Mischung anschließend gemeinsam aus der Gas-Feststoff-Suspension abgetrennt werden und daß ein Teil der abgetrennten Feststoffe mit dem Abgas des Sinterbandes erneut in Kontakt gebracht wird.

Mit dem erfindungsgemäßen Verfahren kann im Reingas zuverlässig eine Konzentration an polyhalogenierten Dibenzodioxinen und Dibenzofuranen < 0,1 ng TE pro Nm³ eingehalten werden, wobei das verunreinigte Abgas des Sinterprozesses einen Gehalt an polyhalogenierten Dibenzodioxinen und Dibenzofuranen von 1 bis 10 ng TE pro Nm³ hat. Die nach der Erfindung vorgesehene Gasgeschwindigkeit von 6 bis 20 m/s wird dadurch realisiert, daß das staubhaltige Abgas des Sinterbandes mit der aus natürlich vorkommenden Zeolithen bestehenden Mischung in einem Flugstromreaktor in Kontakt gebracht wird.

Nach der Erfindung ist ferner vorgesehen, daß die Zeolith-Mischung aus 10 bis 20 Gew.-% Mordenit, 60 bis 70 Gew.-% Clinoptilolit, 0 bis 5 Gew.-% Montmorillonit und Rest SiO₂ besteht. Bei diesen Verfahrensbedingungen werden die vorgenannten Schadstoffkonzentrationen im Reingas zuverlässig eingehalten und darüber hinaus im Regelfall unterschritten, obwohl die Adsorption in Gegenwart des im Abgas enthaltenen Staubs und Wasserdampfs sowie der im Abgas enthaltenen gasförmigen Schadstoffe abläuft.

Die der Erfindung zugrundeliegende Aufgabe wird ferner durch die Schaffung einer Vorrichtung zur Durchführung des Verfahrens gelöst, die aus einem Flugstromreaktor, einem mehrfeldrigen Elektroabscheider und einer Feststoff-Rückführleitung besteht, wobei die Feststoff-Rückführleitung den Sammelraum des ersten Feldes des Elektroabscheiders oder die Sammelräume des ersten und zweiten Feldes des Elektroabscheiders mit der in den Flugstromreaktor mündenden Abgasleitung verbindet. Mit dieser Vorrichtung wird eine weitgehende Abtrennung der im Sinterabgas enthaltenen polyhalogenierten Dibenzodioxine und Dibenzofurane sowie der staubförmigen Feststoffteilchen erreicht, so daß das aus dem Elektroabscheider austretende Abgas einen Staubgehalt < 40 mg/Nm³ sowie eine Konzentration an polyhalogenierten Dibenzodioxinen und Dibenzofuranen < 0,1 ng TE pro Nm³ aufweist. Die im Abgas enthaltenen gasförmigen Schadstoffe, insbesondere CO, SO₂, HCl und HF, können in bekannter Weise durch nachgeschaltete Reinigungsverfahren aus dem Abgasstrom entfernt werden.

In weiterer Ausgestaltung der Erfindung ist vorgesehen, daß dem Elektroabscheider ein Schlauchfilter nachgeordnet ist, wodurch Staubgehalte im Reingas realisiert werden können, die signifikant unter 40 mg/Nm³ liegen und Staubspitzen im Rohgas abgefangen werden.

Die der Erfindung zugrundeliegende Aufgabe wird alternativ durch die Schaffung einer Vorrichtung zur Durchführung des Verfahrens gelöst, die aus einem Flugstromreaktor, einem Schlauchfilter und einer Feststoff-Rückführleitung besteht, wobei die Feststoff-Rückführleitung den Sammelraum des Schlauchfilters mit der in den Flugstromreaktor mündenden Abgasleitung verbindet. Auch mit dieser Vorrichtung wird eine weitgehende Abtrennung der staubförmigen Feststoffteilchen und der polyhalogenierten Dibenzodioxine und Dibenzofurane erreicht, so daß der aus dem Schlauchfilter austretende Abgasstrom eine Staubkonzentration < 50 mg/Nm³ und eine Konzentration an polyhalogenierten Dibenzodioxinen und Dibenzofuranen < 0,1 ng TE pro Nm³ hat.

In weiterer Ausgestaltung der Erfindung ist vorgesehen, daß die Abgasleitung, in der das vom Sinterband kommende Sinterabgas geführt wird, als Flugstromreaktor gestaltet ist. Hierdurch kann in vorteilhafter Weise eine Vereinfachung der erfindungsgemäßen Vorrichtung erreicht werden, die sich positiv auf die Investitions- und Betriebskosten auswirkt.

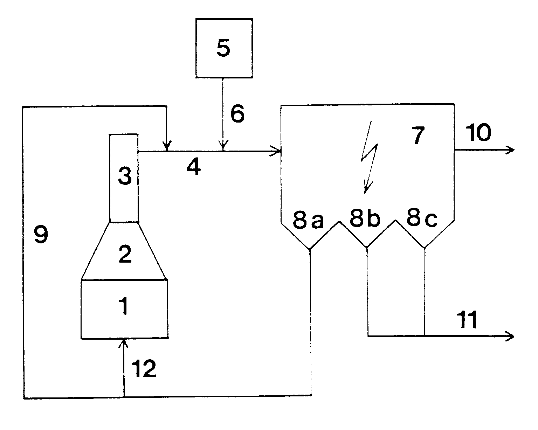

Der Gegenstand der Erfindung wird nachfolgend anhand der Zeichnung und eines Ausführungsbeispiels näher erläutert.

Auf der als Sinterband gestalteten Sintermaschine (1) werden aus Agglomeraten, die feinkörniges Eisenerz und feinkörnigen Koks enthalten, Eisenerz-Pellets hergestellt, die anschließend einem Hochofen zugeführt werden. Aus der Abgashaube (2) des Sinterbandes (1) werden pro Stunde ca. 500 000 m³ Abgas in den Wärmeaustauscher (3) geführt, wo eine Abkühlung des Abgases auf ca. 200°C erfolgt. Das Abgas gelangt anschließend in die Abgasleitung, die als Flugstromreaktor (4) gestaltet ist. Das im Flugstromreaktor (4) fließende Abgas hat folgende Zusammensetzung:

| | |
|---|---|
| N₂ | 26 bis 73 % |
| O₂ | 7 bis 18 % |
| H₂O | 6 bis 36 % |
| CO₂ | 4 bis 23 % |
| CO | 0,1 bis 1 % |
| SO₂ | 100 bis 200 mg/Nm³ |
| HCl | 50 bis 80 mg/Nm³ |
| HF | < 10 mg/Nm³ |
| Staub | 400 bis 600 mg/Nm³ |
| Dibenzodioxine und Dibenzofurane | 1 bis 10 ng TE/Nm³ |

Dem im Flugstromreaktor (4) geführten Gasstrom werden pro Nm³ 0,1 bis 1 g einer Zeolith-Mischung aus dem Vorratsbehälter (5) über die Leitung (6) pneumatisch zudosiert. Die Zeolith-Mischung hat einen mittleren Teilchendurchmesser d₅₀ von 20 µm und besteht aus 20 Gew.-% Mordenit, 70 Gew.-% Clinoptilolit, 5 Gew.-% Montmorillonit und Rest SiO₂. Die im Flugstromreaktor (4) geführte Gas-Feststoff-Suspension erlangt durch Wärmeverluste und Mischeffekte eine Temperatur von ca. 140°C und tritt mit dieser Temperatur in den Elektroabscheider (7) ein, der aus drei Feldern besteht, wobei Jedem Feld ein Staubbunker (8a), (8b), (8c) zugeordnet ist. Im Staubbunker (8a) des ersten Feldes des Elektroabscheiders (7) fallen ca. 90 Gew.-% des Staubs und der Zeolith-Mischung an. Im Staubbunker (8b) werden ca. 4 Gew.-% und im Staubbunker (8c) ca. 1 Gew.-% des Staubs und der Zeolith-Mischung abgeschieden, so daß das aus dem Elektroabscheider (7) austretende gereinigte Gas einen Staubgehalt < 40 mg/Nm³ aufweist. Im stationären Gleichgewicht werden aus dem Staubbunker (8a) pro Nm³ Abgas 5 bis 100 g des Feststoffgemischs in den Flugstromreaktor (4) zurückgeführt, so daß die Zeolith-Mischung im Flugstromreaktor mehrmals mit dem Abgas in Kontakt gebracht wird. Dieser Feststoff wird dem Flugstromreaktor (4) über die Rückführleitung (9) zugeführt. Das über die Leitung (10) aus dem Elektroabscheider (7) austretende gereinigte Abgas hat eine Konzentration an polyhalogenierten Dibenzodioxinen und Dibenzofuranen < 0,1 ng TE pro Nm³ und eine Temperatur von ca. 120°C. Bevor es in die Atmosphäre entlassen wird, können die noch vorhandenen gasförmigen Schadstoffe, insbesondere CO, SO₂, HCl und HF, durch nachgeschaltete Reinigungsverfahren abgetrennt werden. Die Feststoffe, die in den Staübbunkern (8b) und (8c) anfallen und in denen vor allem die Alkalisalze angereichert sind, werden über die Leitung (11) abgeführt. Über die Leitung (12) wird ein Teil der Feststoffe aus dem Staubbunker (8a) und damit aus dem System ausgeschleust und in die Sinteranlage (1) zurückgeführt. Die aus der Leitung (11) austretenden Feststoffe werden auf einer Deponie gelagert.

## Patentansprüche

1. Verfahren zur Abtrennung von polyhalogenierten Dibenzodioxinen und Dibenzofuranen aus dem Abgas eines Sinterprozesses, insbesondere eines Eisenerz-Sinterprozesses, dadurch gekennzeichnet, daß das gesamte, staubhaltige Abgas des Sinterbandes oberhalb des Taupunktes bei einer Temperatur von 90 bis 180°C und einer Geschwindigkeit von 6 bis 20 m/s mit einer Mischung aus natürlich vorkommenden Zeolithen in einer Gas-Feststoff-Suspension während einer Reaktionszeit von 0,5 bis 10 s in Kontakt gebracht wird, wobei der mittlere Teilchendurchmesser d₅₀ der Zeolith-Mischung 5 bis 100 µm und die mittlere Suspensionsdichte der Gas-Feststoff-Suspension 5 bis 500 g Feststoff pro Nm³ Abgas beträgt, daß der Staub sowie die Zeolith-Mischung anschließend gemeinsam aus der Gas-Feststoff-Suspension abgetrennt werden und daß ein Teil der abgetrennten Feststoffe mit dem Abgas des Sinterbandes erneut in Kontakt gebracht wird.

2. Verfahren nach Anspruch 1, dadurch gekennzeichnet, daß die Zeolith-Mischung aus 10 bis 20 Gew.-% Mordenit, 60 bis 70 Gew.-% Clinoptilolit, 0 bis 5 Gew.-% Montmorillonit und Rest SiO₂ besteht.

3. Vorrichtung zur Durchführung des Verfahrens nach den Ansprüchen 1 und 2, dadurch gekennzeichnet, daß sie aus einem Flugstromreaktor (4), einem mehrfeldrigen Elektroabscheider (7) und einer Feststoff-Rückführleitung (9) besteht, wobei die Feststoff-Rückführleitung (9) den Sammelraum (8a) des ersten Feldes des Elektroabscheiders (7) oder die Sammelräume (8a, 8b) des ersten und zweiten Feldes des Elektroabscheiders (7) mit der in den Flugstromreaktor (4) mündenden Abgasleitung verbindet.

4. Vorrichtung nach Anspruch 3, dadurch gekennzeichnet, daß dem Elektroabscheider (7) ein Schlauchfilter nachgeordnet ist.

5. Vorrichtung zur Durchführung des Verfahrens nach den Ansprüchen 1 und 2, dadurch gekennzeichnet, daß sie aus einem Flugstromreaktor, einem Schlauchfilter und einer Feststoff-Rückführleitung besteht, wobei die Feststoff-Rückführleitung den Sammelraum des Schlauchfilters mit der in den Flugstromreaktor mündenden Abgasleitung verbindet.

6. Vorrichtung nach den Ansprüchen 3 bis 5, dadurch gekennzeichnet, daß die Abgasleitung als Flugstromreaktor (4) gestaltet ist.

## Claims

1. A process of separating polyhalogenated dibenzodioxins and dibenzofurans from the exhaust gas of a sintering process, in particular an iron ore sintering process, characterized in that above the dew point at a temperature of 90 to 180°C and a speed of 6 to 20 m/s the entire, dust-laden exhaust gas of the sintering strand is brought in contact with a mixture of naturally occcurring zeolites in a gas-solids suspension during a reaction time of 0.5 to 10 s, where the mean particle diameter d₅₀ of the zeolite mixture is 5 to 100 µm and the mean suspension density of the gas-solids suspension is 5 to 500 g solids per Nm³ exhaust gas, that the dust as well as the zeolite mixture are subsequently together separated from the gas-solids suspension, and that a part of the separated solids is again brought in contact with the exhaust gas of the sintering strand.

2. The process as claimed in claim 1, characterized in that the zeolite mixture consists of 10 to 20 wt-% mordenite, 60 to 70 wt-% clinoptilolite, 0 to 5 wt-% montmorillonite and the rest SiO₂.

3. An apparatus for performing the process as claimed in claims 1 and 2, characterized in that it comprises an entrained-bed reactor (4), a multi-field electrostatic precipitator (7) and a solids recirculating line (9), where the solids recirculating line (9) connects the collecting space (8a) of the first field of the electrostatic precipitator (7) or the collecting spaces (8a, 8b) of the first and the second field of the electrostatic precipitator (7) with the exhaust gas line opening into the entrained-bed reactor (4).

4. The apparatus as claimed in claim 3, characterized in that subsequent to the electrostatic precipitator (7) a bag filter is provided.

5. The apparatus for performing the process as claimed in claims 1 and 2, characterized in that it comprises an entrained-bed reactor, a bag filter and a solids recirculating line, where the solids recirculating line connects the collecting space of the bag filter with the exhaust gas line opening into the entrained-bed reactor.

6. The apparatus as claimed in claims 3 to 5, characterized in that the exhaust gas line is designed as entrained-bed reactor (4).

## Revendications

1. Procédé de séparation de dibenzodioxines et de dibenzofurannes polyhalogénés du gaz d'échappement d'un procédé de frittage, notamment d'un procédé d'agglomération de minerai de fer par frittage, caractérisé en ce qu'il consiste à mettre tout le gaz d'échappement, contenant de la poussière, de la bande de frittage au dessus du point de rosée à une température de 90 à 180°C et à une vitesse de 6 à 20 m/seconde, en contact avec un mélange de zéolites d'origine naturelle en une suspension gaz/matière solide pendant une durée de réaction de 0,5 à 10 secondes, le diamètre moyen de particule d₅₀ du mélange de zéolites étant de 5 à 100 µm, et la masse volumique moyenne de la suspension gaz/matière solide étant de 5 à 500 g de matière solide par m³ normal de gaz d'échappement, à séparer la poussière ainsi que le mélange de zéolites ensuite ensemble de la suspension gaz/matière solide et à mettre une partie des matières solides séparées à nouveau en contact avec le gaz d'échappement de la bande de frittage.

2. Procédé suivant la revendication 1, caractérisé en ce que le mélange de zéolites est constitué de 10 à 20 % en poids de mordénite, de 60 à 70 % en poids de clinoptilolite, de 0 à 5 % en poids de montmorillonite, le reste étant du SiO₂.

3. Installation pour la mise en oeuvre du procédé suivant les revendications 1 et 2, caractérisée en ce qu'elle est constituée d'un réacteur (4) à passage de courant, d'un électroséparateur (7) à plusieurs champs et d'un conduit (9) de retour des matières solides, mettant en communication la chambre (8a) collectrice du premier champ de l'électroséparateur (7) ou les chambres (8a, 8b) collectrices du premier et du deuxième champ de l'électroséparateur (7) avec le conduit de gaz d'échappement débouchant dans le réacteur (4) à passage de courant.

4. Installation suivant la revendication 3, caractérisée en ce qu'un filtre à manche est monté en aval de l'électroséparateur (7).

5. Installation de mise en oeuvre du procédé suivant les revendications 1 et 2, caractérisée en ce qu'il est constitué d'un réacteur à passage de courant, d'un filtre à manche et d'un conduit de retour de la matière solide, le conduit de retour de la matière solide mettant la chambre collectrice du filtre à manche en communication avec le conduit de gaz d'échappement débouchant dans le réacteur à passage de courant.

6. Installation suivant les revendications 3 à 5, caractérisée en ce que le conduit de gaz d'échappement est conformé en réacteur (4) à passage de courant.
